Europäisches Patentamt

European Patent Office

Office européen des brevets

(19)

(11) Numéro de publication: **0 099 819**
**B1**

(12) **FASCICULE DE BREVET EUROPEEN**

(45) Date de publication du fascicule du brevet:
07.01.87

(51) Int. Cl.⁴: **G 21 C 17/00**

(21) Numéro de dépôt: **83401439.1**

(22) Date de dépôt: **12.07.83**

(54) Véhicule autopropulsé à bras articulés, réservoir et dispositif d'entraînement débrayable pouvant être montés sur ledit véhicule.

(30) Priorité: **15.07.82 FR 8212380**

(43) Date de publication de la demande:
**01.02.84 Bulletin 84/5**

(45) Mention de la délivrance du brevet:
**07.01.87 Bulletin 87/2**

(84) Etats contractants désignés:
**DE GB IT**

(56) Documents cités:
**EP - A - 0 012 655**
**DE - A - 2 640 055**
**FR - A - 2 267 612**
**GB - A - 1 565 049**
**US - A - 3 999 423**
**US - A - 4 218 923**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Asty, Michel, 12, rue d'Anjou, F-78000 Versailles (FR)**
Inventeur: **Lerat, Bernard, 4 Bis, rue P. Lescot, F-91430 Igny (FR)**
Inventeur: **Saglio, Robert, 9, rue des Marchais, F-92160 Antony (FR)**
Inventeur: **Viard, Jacky, 60, Avenue Marcel Cachin, F-92320 Chatillon sous Bagneux (FR)**

(74) Mandataire: **Mongrédien, André et al, c/o BREVATOME 25, rue de Ponthieu, F-75008 Paris (FR)**

## Description

La présente invention a pour objet un véhicule autopropulsé utilisable notamment pour l'inspection des parois des cuves de réacteurs nucléaires.

Dans les installations nucléaires, et plus particulièrement les réacteurs à neutrons rapides, les cuves sont constituées par une double paroi métallique qu'il faut inspecter régulièrement afin de détecter d'éventuels défauts dans le métal, notamment au niveau des soudures.

On a déjà conçu des véhicules pouvant transporter des moyens de contrôle tels que des transducteurs à ultrasons et aptes à se déplacer dans l'espace compris entre deux parois sensiblement parallèles. L'article «In Service Inspection of Main and Safety Tanks Weldments» (IAEA Specialists' Meeting on «In Service Inspection and Monitoring of LMFBRS», Bensberg 20–23 May 1980) décrit un tel véhicule comportant deux roues motrices et directrices s'appuyant sur l'une des parois tandis que deux leviers maintenus par des resorts prennent appui sur l'autre paroi par l'intermédiaire de roues ayant un faible diamètre ou de billes. Un tel véhicule présente l'inconvénient d'être relativement lourd et, dans le cas où les bras sont équipés de billes, celles-ci risquent de laisser des traces sur les parois.

La présente invention a justement pour but d'éliminer ces inconvénients en proposant un véhicule léger, présentant une bonne stabilité et qui élimine le risque de marquage des parois.

Selon la principale caractéristique du véhicule objet de l'invention, celui-ci comprend un premier et un deuxième jeu de deux roues motrices et directrices liées à une structure centrale porteuse par des moyens de liaison, l'ensemble constitué par les roues et lesdits moyens de liaison étant symétrique par rapport à un plan longitudinal et un plan transversal, ces derniers étant perpendiculaires entre eux et perpendiculaires auxdites parois.

Selon un mode de réalisation préféré, les moyens de liaison entre les deux roues du premier jeu et la structure centrale comprennent deux bras longitudinaux dont une extrémité est liée à la structure centrale porteuse, chaque roue étant montée à l'autre extrémité de chaque bras.

Selon une autre caractéristique de ce véhicule, il comporte des moyens permettant aux deux bras longitudinaux de se déplacer dans le plan longitudinal tout en restant symétriques par rapport au plan transversal. Il peut également comporter des moyens élastiques agissant sur les bras longitudinaux afin d'appliquer les roues correspondantes sur l'une des deux parois.

Suivant une autre caractéristique du véhicule objet de l'invention, celui-ci comprend des moyens de déploiement pouvant agir sur les bras longitudinaux afin de les déplacer entre une position de travail et une position escamotée ou position de repos. Dans le mode de réalisation préféré, les moyens de déploiement des bras longitudinaux comprennent un vérin de déploiement et lesdits moyens élastiques, qui font partie des moyens de déploiement, comprennent un vérin de suspension disposé de manière à transmettre aux bras longitudinaux les mouvements du vérin de déploiement.

Selon une autre caractéristique de l'invention, les moyens de liaison entre chaque roue du deuxième jeu et la structure centrale porteuse comprennent un bras transversal dont une extrémité est liée à la structure centrale porteuse, la roue étant montée à l'autre extrémité du bras. Le véhicule peut également comporter des moyens permettant de déplacer les bras transversaux entre une position de travail et une position repliée ou position de repos.

Avantageusement, le véhicule objet de l'invention comprend des moyens de verrouillage permettant de verrouiller les bras longitudinaux et transversaux en position de travail. Il est équipé également de moyens de déverrouillage, en cas d'urgence, des bras longitudinaux et transversaux, ces moyens de déverrouillage comprenant un câble pouvant libérer les moyens de verrouillage s'il est soumis à une traction supérieure à un seuil prédéterminé.

Suivant une disposition particulière des éléments constitutifs du véhicule, les moyens de déploiement des bras longitudinaux sont agencés de manière à agir également sur les bras transversaux afin que ces derniers soient amenés en position de travail en même temps que les bras longitudinaux et il comprend des moyens d'excitation du vérin de déploiement et du vérin de suspension, ces moyens d'excitation étant agencés de telle sorte que l'excitation du vérin de suspension n'est possible que lorsque les bras longitudinaux et transversaux sont verrouillés en position de travail.

D'autre part, chaque roue du véhicule est actionnée par un moteur d'entraînement individuel et des moyens de débrayage de chaque moteur sont prévus.

Suivant une autre caractéristique l'objet de l'invention comprend un dispositif d'entraînement débrayable pouvant être monté sur un tel véhicule. Selon la principale caractéristique de ce dispositif d'entraînement, celui-ci, du type comportant un organe d'accouplement entre une partie menante et une partie menée, se caractérise en ce que ledit organe d'accouplement comprend une partie qui fond sous l'action commandée de moyens générateur de chaleur.

Enfin, ce véhicule pouvant servir, entre autres, au contrôle par ultrasons de parois métalliques, il est équipé d'une mini-cuve remplie d'un liquide servant à assurer le couplage acoustique entre les transducteurs ultrasonores et la paroi à contrôler. Bien entendu, il est possible de monter sur ce véhicule n'importe quel autre moyen de contrôle nécessitant le placage d'un dispositif sur la paroi à contrôler. La cuve est alimentée par un réservoir comportant un tube lesté mobile à l'intérieur de ce réservoir afin de prélever le liquide dans la partie la plus basse de celui-ci.

En effet, ce réservoir se caractérise par la présence d'un tube mobile dont l'extrémité servant à aspirer le liquide est lestée afin de pouvoir toujours prélever le liquide dans la partie la plus basse du réservoir.

D'autres caractéristiques et avantages de l'invention ressortiront de la description qui va suivre, donnée à titre d'exemple purement illustratif et nullement limitatif, en référence aux dessins annexés, dans lesquels:

– la fig. 1 est une vue schématique en coupe d'une cuve de réacteur à double paroi, le véhicule selon l'invention devant se déplacer entre les deux parois,

– la fig. 2 est une vue schématique en perspective du véhicule selon l'invention,

– la fig. 2a est une vue schématique illustrant un montage particulier de l'une des caméras équipant le véhicule de la figure 2,

– la fig. 3 est une vue schématique en élévation et partiellement en coupe de ce véhicule placé entre deux parois,

– les fig. 4a et 4b sont des vues schématiques en élévation des moyens de déploiement des bras longitudinaux respectivement en position escamotée et en position de travail,

– la fig. 5 est une vue schématique en élévation illustrant l'action desdits moyens de déploiement sur les bras transversaux ainsi que sur la mini-cuve contenant le liquide de couplage des moyens de contrôle, – la fig. 6 est une vue de dessus montrant comment on peut déplacer les bras transversaux entre la position de travail et la position de repli,

– la fig. 7 est une vue schématique en élévation et partiellement en coupe du dispositif de déverrouillage des moyens de déploiement,

– la fig. 8 est une vue schématique en coupe des moyens d'entraînement d'une roue du véhicule, dans un plan diamétral de la roue,

– la fig. 9 est une vue schématique en élévation de la partie avant du véhicule, et

– la fig. 10 est une vue schématique montrant la mini-cuve montée sur le véhicule associée à un réservoir de liquide de couplage.

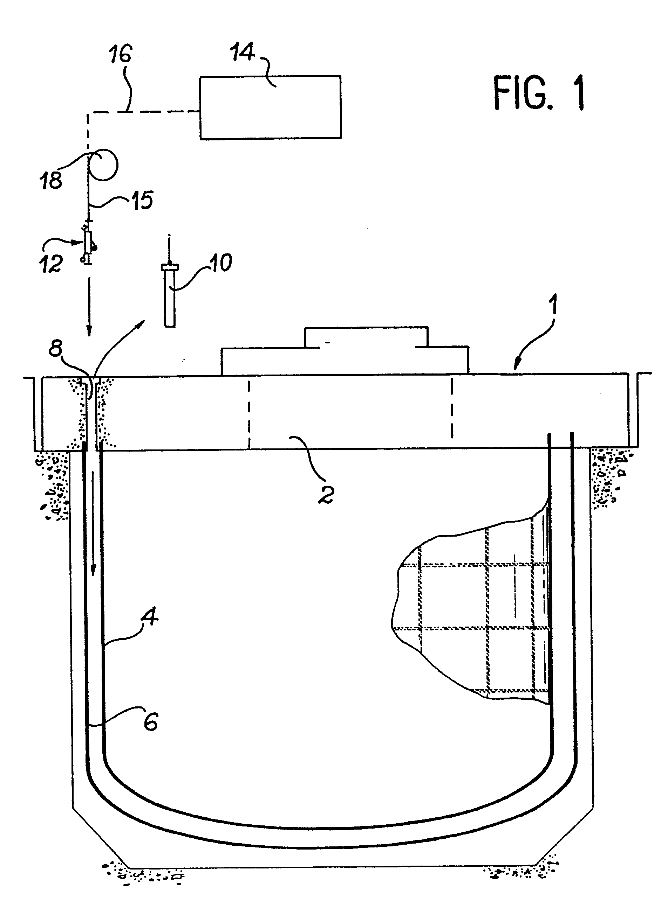

Sur la figure 1, on voit une cuve de réacteur nucléaire, portant la référence générale 1, fermée à sa partie supérieure par une dalle en béton 2 et limitée par une double paroi se composant d'une paroi interne 4 et d'une paroi externe 6. Ces dernières étant généralement réalisées à partir de pièces métalliques soudées, il est nécessaire d'en contrôler l'état, notamment au niveau des soudures, par des moyens de contrôle tels que les ultrasons. Pour cela, on prévoit dans la dalle 2 un certain nombre d'ouvertures telles que 8, obturées par des bouchons 10. Lorsqu'on veut inspecter les parois 4 et 6, on retire le bouchon 10 et on introduit dans l'ouverture 8 le véhicule objet de l'invention, représenté schématiquement en 12 sur la figure. Tous les fils et conduits servant à transmettre au véhicule l'énergie ou les informations nécessaires à son fonctionnement sont rassemblés dans un cordon ombilical 15. Etant donné le nombre important d'appareils à alimenter, le poids du cordon ombilical est assez important par rapport à celui du véhicule: aussi, afin de minimiser les efforts exercés sur le véhicule lui-même, on enroule le cordon ombilical autour d'un treuil 18 tandis qu'un ensemble de fils et de conduits, représenté schématiquement par le trait interrompu 16, le relie à un dispositif de commande et de contrôle 14.

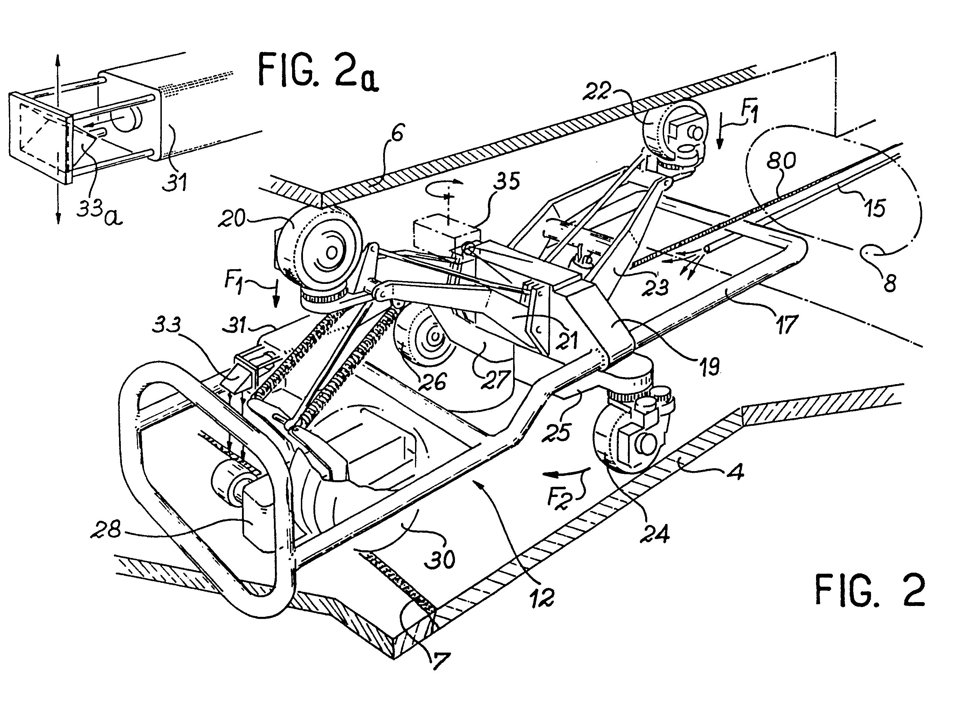

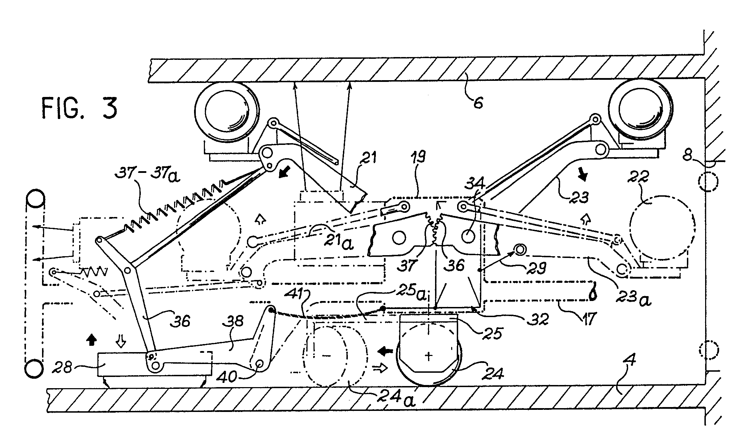

Sur la vue en perspective de la figure 2, on voit l'ensemble du véhicule 12 qui vient d'être introduit dans l'espace compris entre les parois 4 et 6 de la cuve à travers l'ouverture 8. Ce véhicule se compose essentiellement d'une structure centrale porteuse 19 pouvant supporter un châssis 17 et à laquelle sont reliés deux jeux de deux roues, chaque roue étant à la fois motrice et directrice. Le premier jeu se compose des deux roues 20 et 22, qui peuvent prendre appui sur la paroi 6 et sont reliées à la structure centrale 19 par des bras longitudinaux 21 et 23 respectivement. Le deuxième jeu se compose des roues 24 et 26 s'appuyant sur l'autre paroi 4 et reliées à la structure centrale par des bras transversaux 25 et 27 respectivement. Le véhicule porte également une mini-cuve 28 contenant le liquide servant à assurer le couplage acoustique entre la paroi à inspecter 4 et les transducteurs ultrasonores portés par le véhicule, cette mini-cuve étant associée à un réservoir 30 de ce liquide. On voit sur la figure que la mini-cuve 28 est placée en porte-à-faux par rapport à la structure centrale 19: cette disposition a pour but de permettre de contrôler la plus grande partie possible de la surface de la paroi 4, même dans des zones rendues inaccessibles à cause de l'encombrement du véhicule lorsque les bras longitudinaux et transversaux sont déployés en position de travail. La mini-cuve 28 est fixée au reste du véhicule par des moyens qui seront décrits ci-dessous en référence à la fig. 3.

La fig. 2 montre le véhicule en position de travail, dans laquelle les bras 21 et 23 sont relevés afin que les roues 20 et 22 soient en appui sur la paroi 6 tandis que les bras 25 et 27 sont écartés dans le sens transversal: dans cette position, les dimensions du véhicule sont supérieures à celles de l'ouverture 8. Aussi, pour faciliter, l'introduction du véhicule dans l'espace compris entre les parois ainsi que son extraction, on prévoit des dispositifs, qui seront décrits ci-dessous, permettant d'une part d'abaisser les bras 21 et 23 dans le sens des flèches $F_1$ et d'autre part, de ramener les bras transversaux 25 et 27 vers le centre du véhicule, dans le sens de la flèche $F_2$.

On voit sur la figure qu'en position de travail, les bras longitudinaux 21 et 23 sont situés dans un plan perpendiculaire aux parois 4 et 6, dit «plan longitudinal» et restent dans ce plan lorsqu'on les ramène vers le corps du véhicule. D'autre part, les bras 21 et 23 sont rendus solidaires l'un de l'autre afin qu'ils restent constamment symétriques par rapport à un autre plan, dit «plan transversal», qui est perpendiculaire au premier ainsi qu'aux parois 4 et 6 et qui contient les bras transversaux lorsque ceux-ci sont dans la position de travail représentée sur la figure. Les moyens de déploiement des différents bras, qui seront décrits en détail ci-dessous, sont agencés de telle sorte que ces derniers restent constamment symétriques par rapport au plan longitudinal. Ainsi, les mouvements des bras transversaux sont simultanés, de sorte que l'ensemble constitué par les deux jeux de roues et leurs bras de liaison reste constamment symétrique par rapport au plan longitudinal et, lorsque le véhicule est en position de travail, par rapport au plan transversal.

D'autre part, les dimensions des bras transversaux ont été étudiées pour que, en position déployée, la distance entre les roues 24 et 26 soit supérieure à l'intervalle entre les deux parois: on ne risque donc pas de voir le véhicule se retourner par pivotement autour de son axe longitudinal.

Comme on le voit encore sur la figure 2, le véhicule est équipé de deux caméras: la première, placée à l'avant, est une caméra d'inspection 31 équipée d'un prisme 33 qui, dans le cas de la figure 2, est disposé de manière à permettre l'observation du cordon de soudure 7 de la paroi 4. La fig. 2a illustre une autre disposition dans laquelle le prisme 33a a une forme telle qu'il permet d'observer les deux parois à la fois: on peut ainsi, par exemple, observer simultanément un cordon de soudure sur l'une des parois et un repère correspondant gravé sur l'autre paroi. L'autre est une caméra de navigation 35 pouvant pivoter autour d'un axe perpendiculaire aux parois 4 et 6, et servant à contrôler les déplacements du véhicule entre les deux parois.

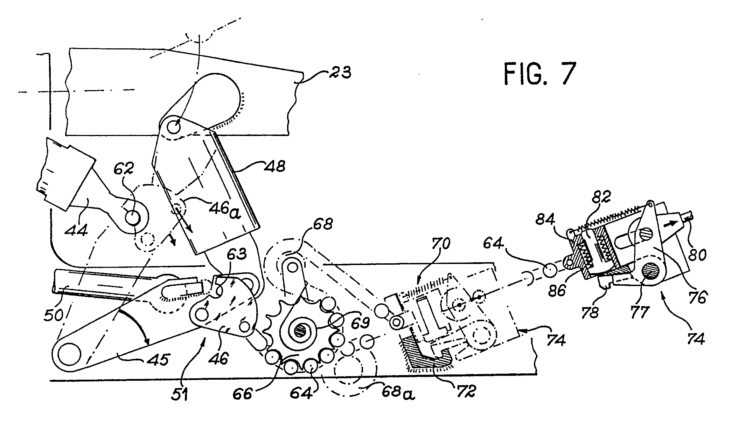

Enfin, on voit à l'arrière du véhicule, d'une part le cordon ombilical 15 contenant les fils d'alimentation des moteurs, les conduites d'arrivée de gaz pour les vérins, d'alimentation en liquide de couplage pour les transducteurs à ultrasons, etc. . . . et, d'autre part, un câble ou filin de traction 80 qui sert à déverrouiller les bras longitudinaux et transversaux en cas d'urgence et à l'extérieur. Le fonctionnement du système de déverrouillage sera décrit dans la suite du présent texte, en référence à la fig. 7.

On va maintenant décrire le fonctionnement des moyens de déploiement des différents bras. Si l'on se reporte à la vue schématique en élévation de la figure 3, on voit que ces moyens de déploiement 32, montés sur la structure centrale 19 du véhicule, agissent simultanément sur plusieurs ensembles d'éléments. Tout d'abord, ils permettent de soulever le bras longitudinal 23 (flèche 29) pour le faire passer de la position de repos 23a représentée en traits mixtes à position de travail 23 représentée en traits pleins. Au cours de ce mouvement, le bras 23 pivote autor d'une axe 34, fixe par rapport au véhicule, et, comme son extrémité opposée à la roue 22 porte un secteur denté 36 qui engrène sur un secteur denté identique 37 prévu à l'extrémité correspondante du bras 21, on voit qu'en agissant sur le seul bras 23, il est possible de manœuvrer simultanément le bras 21.

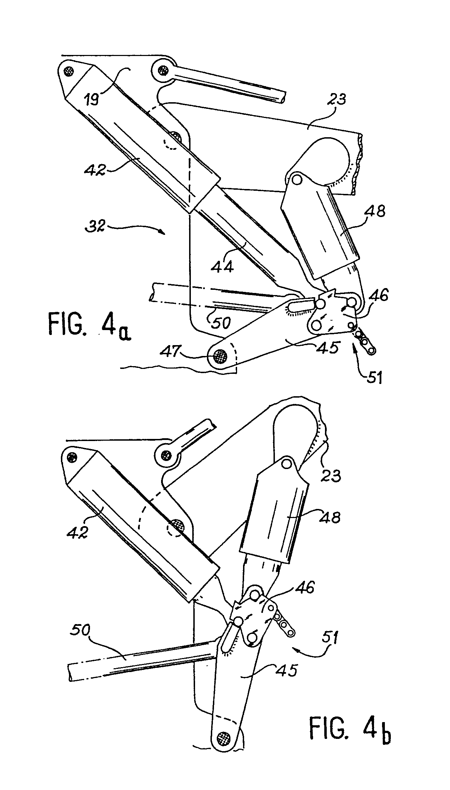

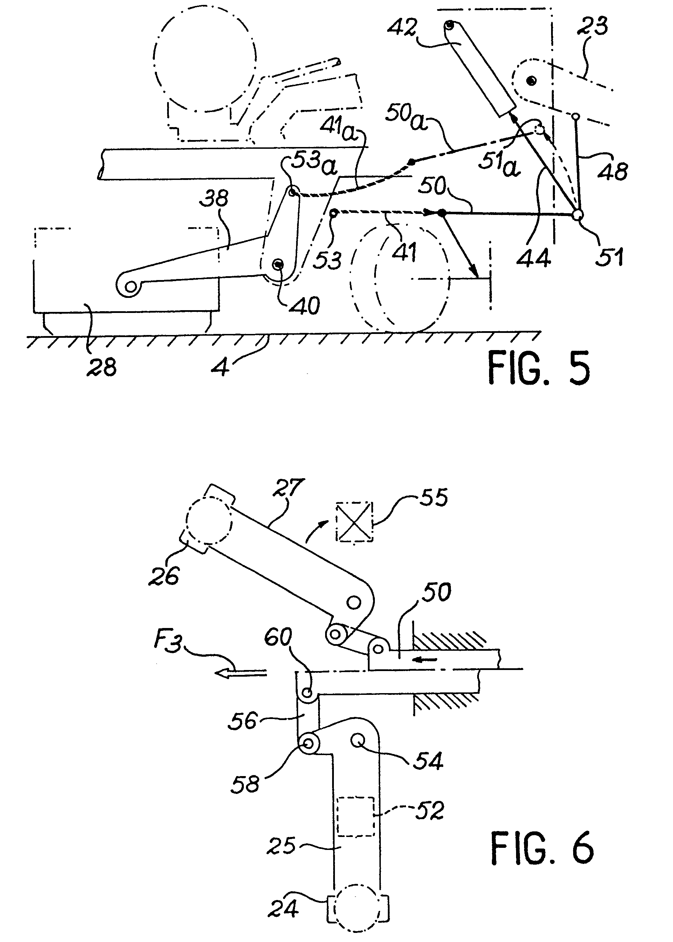

Ce dernier a été également représenté en traits pleins à sa position de travail. On voit comment il est relié à la mini-cuve 28: la liaison est assurée par un pantographe 36 tandis que deux ressorts 37, 37a assurent le placage de la mini-cuve 28 sur la paroi 4 lorsque le bras 21 est en appui sur l'autre paroi 6. D'autre part, la mini-cuve 28 est reliée au châssis 17 par une pièce intermédiaire 38 mobile en rotation autour d'un axe 40 porté par le véhicule. Enfin, un câble 41 relie la pièce 38 aux moyens de déploiement 32, comme cela sera décrit plus en détail ci-dessous en référence aux figures 4 et 5.

Les moyens de déploiement 32 agissent également sur les bras transversaux: on voit sur la figure le bras 25 et la roue 24 en position repliée (25a, 24a, traits mixtes) et en position de travail (traits pleins). La constitution des moyens de déploiement 32 est illustrée aux figures 4a et 4b. Sur la fig. 4a, on voit que cet ensemble se compose essentiellement d'un vérin de déploiement 42 fixé à la structure 19 du véhicule et à l'intérieur duquel peut coulisser une tige 44. L'extrémité de cette dernière opposée au corps du vérin actionne une articulation 51 à laquelle sont reliées plusieurs pièces. Tout d'abord, la tige 44 agit par l'intermédiaire d'un verrou 46, dont le rôle sera décrit plus loin, sur une pièce de liaison 45 mobile autour d'un axe 47 fixe par rapport à la structure centrale 19. La pièce 45 agit d'une part sur un vérin de suspension 48 lié au bras 23, et d'autre part sur une bielle 50, cette dernière étant apte à commander les mouvements des bras transversaux.

La figure 4a représente l'ensemble en position de repos. Lorsque la tige 44 du vérin se rétracte, la pièce 45 bascule jusqu'à la position de travail représentée à la figure 4b: le vérin de suspension 48 a poussé le bras 23 vers le haut et la bielle 50 a été poussée vers la gauche de la figure. Au cours de ce mouvement, l'ensemble constitué par la pièce 45 et le vérin 48 a franchi un point d'arc-boutement, ce qui assure le maintien du bras 23 en position déployée: il faut en effet exercer un certain effort avec le vérin 42 pour franchir à nouveau ce point d'arc-boutement lorsqu'on veut ramener le bras 23 en position de repos.

Quant au vérin 48, il joue également un rôle dans la suspension de l'ensemble afin d'appuyer les roues 20 et 22 équipant les bras 21 et 23 sur la paroi 6. Un distributeur à gaz (non représenté) assure l'alimentation des vérins 42 et 48, mais il est agencé de telle sorte que l'alimentation du vérin 48 ne se produise que lorsque le vérin 42 est dans la position de la fig. 4b.

La fig. 5 résume les différentes fonctions des moyens de déploiement 32: lorsqu'on excite le vérin 42, la tige 44 ramène l'articulation 51 en une position 51a: le vérin 48 pousse le bras 23 vers le haut et la bielle 50 vient en une position 50a. Le câble 41 relie l'extrémité de la bielle 50 à un point d'attache 53 sur la pièce 38. Pendant le déploiement des bras longitudinaux et transversaux, le câble 41 est relâché et c'est le bras 21, par l'intermédiaire du pantographe 36, qui applique la mini-cuve 28 sur la cuve 4 (figure 3). Lorsque la bielle 50 revient en position de repos, elle tend le câble 41: celui-ci passe de la position 41a à la po-

sition 41, contribuant ainsi au relevage de la mini-cuve 28 par rotation de la pièce 38.

La bielle 50 agit également sur les bras transversaux 25 et 27 comme cela est illustré sur la vue de dessus de la figure 6 où l'on a représenté le bras 25 en position de travail et le bras 27 en position repliée. On voit que le bras 25 est mobile autour d'un axe fixe 54 et que son extrémité opposée à la roue 24 est reliée à la bielle 50 au moyen d'une biellette 56 articulée sur deux axes 58 et 60. Lorsque la bielle 50 est poussée dans le sens de la flèche $F_3$, le bras 25 pivote autour de l'axe 54 et vient dans la position représentée sur la figure, où il est arrêté par une butée 52 tandis que le bras 27 est arrêté par la butée 55. Si la bielle 50 est déplacée en sens inverse, le bras pivote en sens inverse et vient dans la position symétrique de celle qui a été représentée pour le bras 27.

Etant donné qu'un incident de fonctionnement est toujours possible, il a été nécessaire de prévoir un dispositif de déverrouillage permettant de ramener les bras longitudinaux et transversaux le long du corps du véhicule même en cas de grippage du vérin de déploiement. Ce dispositif est représenté sur la fig. 7 où l'on voit l'extrémité de la tige 44 du vérin séparée de la pièce 45 après déverrouillage. En mode normal de fonctionnement, la tige 44 est liée au verrou 46 par une goupille 62 qui pénètre dans une encoche 63, les mouvements de la tige 44 étant transmis à la pièce 45 pat le verrou 46.

Une chaîne 64, dont une première extrémité est fixée au verrou 46, s'enroule sur une roue dentée 66, puis sur un pignon 68 et a son autre extrémité fixée au système de déverrouillage proprement dit 70. Ce dernier comporte une gâche 72 fixée au corps du véhicule et une partie mobile 74 représentée en traits mixtes en position normale et en traits pleins à droite de la figure après déverrouillage. La partie mobile 74 comporte une pièce de liaison 76, mobile autour d'un axe 77 porté par ledit-équipage 74, et dont une extrémité comporte un becquet 78 qui, en position normale, est bloqué par la gâche 72, empêchant ainsi tout déplacement de la partie 74. Une traction sur le câble 80 permet de dégager le becquet 78 par rotation de la pièce 76, mais ce mouvement est gêné par une pièce 82 maintenue dans un logement 84 par un empilement de rondelles élastiques 86: le mouvement n'a donc lieu que si l'on exerce sur le câble une traction supérieure à un certain seuil, ce qui empêche un déverrouillage intempestif.

En cas d'extraction rendue nécessaire par un incident survenu au véhicule, on tire sur le câble 80 jusqu'à ce que le becquet 78 se dégage de la gâche 72 et l'équipage 74 est entraîné vers la droite de la figure. Ceci a pour effet de tendre la chaîne 64 qui est fixée à cet équipage mobile et le pignon 68 vient en une position 68a. Toujours à cause de la tension de la chaîne, le verrou 46 est entraîné de sa position de travail 46a représentée en traits mixtes à la position inférieure représentée en traits pleins, la goupille 62 s'étant dégagée de l'encoche 63. Au cours de ce mouvement, le verrou 46 a entraîné la pièce 45 qui, à son tour, a ramené le vérin 48 et la bielle 50 à leur position de repos correspondant à la fig. 4a; les bras longitudinaux et transversaux, ainsi que la mini-cuve 28, ont donc été ramenés automatiquement en position de repos. Dans ce cas, on introduit un dispositif spécial qui agrippe le châssis afin d'empêcher un retournement accidentel du véhicule. On peut alors extraire celui-ci de l'espace compris entre les deux parois, à travers l'ouverture 8, en tirant sur le câble 80. On effectue les interventions ou réparations nécessaires, et, lors de la remise en service, on ramène le pignon 68 dans sa position normale et on replace la goupille 62 dans l'encoche 63.

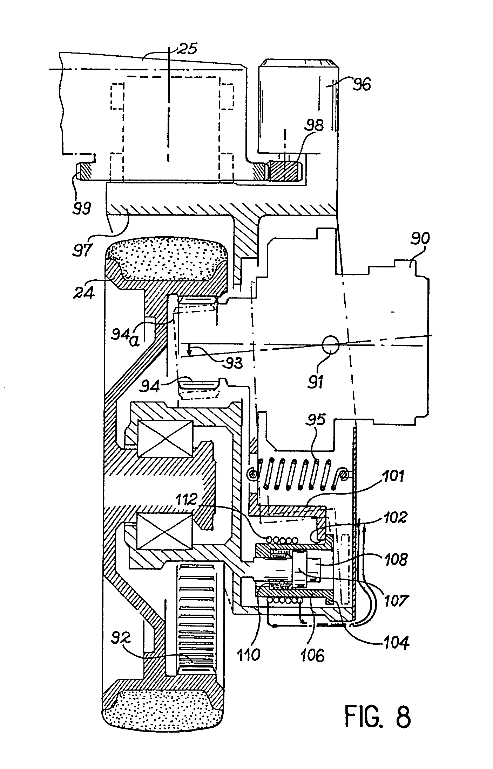

Un autre dispositif de sécurité a été prévu au niveau des moteurs d'entraînement associés à chaque roue permettant de les débrayer en cas de panne. Un tel dispositif est illustré sur la vue en coupe de la figure 8 où l'on voit la roue 24 entraînée par un moteur 90 agissant sur une couronne dentée 92, solidaire de la roue 24, par l'intermédiaire d'un pignon 94. Un deuxième moteur 96, dit «moteur de rotation», est solidaire du support 97 de la roue 24 et entraîne un pignon 98 qui engrène sur une roue dentée 99 solidaire du bras transversal 25: ainsi, en agissant sur le moteur 96, on peut orienter le plan de la roue 24 par rapport au bras 25.

Le moteur 90 est mobile en rotation autour d'un axe 91: il est sollicité dans le sens de la flèche 93 par un ressort 95 qui agit sur un bras 101 solidaire du moteur 90, mais l'extrémité 102 du bras 101 vient en butée contre le rebord 104 d'une pièce cylindrique 106 qui est mobile le long d'une autre pièce cylindrique 108 disposée à l'intérieur de la pièce 106 et coaxialement à cette dernière. Cependant, ce mouvement est empêché par la présence d'un alliage fusible 110, qui est solide à la températur normale de fonctionnement et vient en butée contre un épaulement 107 de la pièce 108. L'alliage fusible 110 peut être par exemple un alliage d'étain ou de plomb, mais n'importe quel autre alliage est utilisable à condition d'une part qu'il fonde facilement sous l'action de la chaleur et que, d'autre part, il soit solide et peu sujet au fluage à la température de service.

Si l'on désire débrayer le moteur 90, on fait passer un courant électrique dans une résistance 112 qui entoure la pièce 106; l'alliage 110 fond et la pièce 106 peut coulisser le long de la pièce 108 sous l'action du bras 101 et du ressort 95. Le moteur 90 pivote alors autour de l'axe 91 et le pignon 94 se dégage de la couronne 92, venant dans la position 94a représentée en traits mixtes sur la figure. Bien entendu, un dispositif semblable a été prévu pour chacune des trois autres roues.

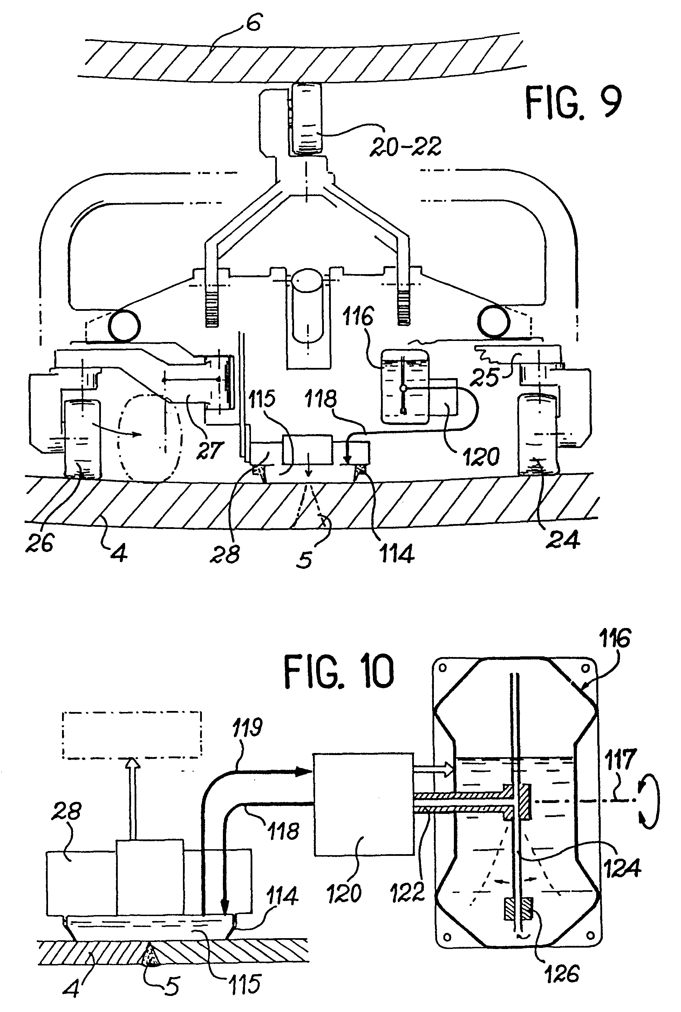

Une autre particularité de l'invention concerne les moyens d'alimentation en liquide de couplage de la mini-cuve supportant les transducteurs à ultrasons. Cette disposition apparaît aux figures 9 et 10.

La figure 9 est une vue en élévation de la partie avant du véhicule montrant celui-ci se déplaçant le long d'un cordon de soudure 5 de la paroi 4. On distingue le cadre avant du châssis ainsi que les roues 24 et 26 en appui sur la paroi 4 tandis que les roues 20 et 22 sont en appui sur la paroi 6. Dans le cas de la figure 9, le véhicule se déplace le long du cordon de soudure 5 qui est parallèle à son plan longitudinal et perpendiculaire au plan de la figure et les transducteurs à ultrasons sont animés d'un mouvement de va-et-vient qui leur permet de contrôler la zone de la paroi 4 voisine de la soudure 5. Cependant, d'autres mouvements sont possibles: si l'on se reporte à nouveau à la figure 2, on voit que la mini-cuve 28 se trouve audessus d'un cordon de soudure 7 qui est perpendiculaire au plan longitudinal du véhicule. Dans ce cas, on actionne les moteurs de rotation des roues afin de les faire pivoter de 90° et le véhicule se déplace «en crabe» le long du cordon 7. Bien entendu, les transducteurs ultrasonores sont montés de telle sorte qu'ils puissent effectuer un balayage perpendiculairement au cordon 7.

Sur la figure 9, on voit que la mini-cuve 28 est équipée d'un joint à lèvres 114 définissant un espace 115 dans lequel est maintenu le liquide de couplage. Elle est alimentée par un réservoir 116 à l'aide d'une conduite 118 et d'une pompe 120.

Ces éléments apparaissent mieux sur la figure 10 où l'on voit la pompe 120 reliée à la mini-cuve 28 par la conduite d'alimentation 118 et une conduite de retour 119. Le réservoir 116 a sensiblement la forme d'un cylindre dont l'axe 117 est contenu dans le plan de la figure. La pompe 120 est reliée par l'intermédiaire d'un tuyau 122 à la partie centrale d'un tube 124 se trouvant à l'intérieur de réservoir 116. Le tuve 124 a une longueur sensiblement égale au diamètre du réservoir 116 et il est monté de manière à pouvoir pivoter d'une part autour de l'axe 117 et d'autre part autour d'un deuxième axe perpendiculaire à ce dernier. L'une des extrémités du tube 124 est équipée d'une masselotte 126: ainsi, quelle que soit la position du réservoir 116, l'extrémité du tube 124 portant la masselotte 126 se trouvera toujours dans la partie la plus basse du réservoir et on pourra aspirer le liquide quelle que soit la position du véhicule, même si la quantité de liquide devient faible. Bien entendu, le réservoir 116 comporte également un certain nombre de dispositifs nécessaires à son fonctionnement (système de mise à l'air par exemple), qui sont connus en soi et n'ont pas été représentés sur la figure pour plus de clarté.

Ainsi, le véhicule selon l'invention présente de nombreux avantages dont le premier est la légèreté grâce à la structure centrale porteuse qui reprend les efforts d'appui des roues sur les parois. D'autre part, il présente une bonne stabilité grâce aux deux jeux de roves placés dans des plans perpendiculaires et on évite le marquage des parois puisque toutes les roues sont équipées de bandages souples. Enfin, la sécurité est accrue pour plusieurs raisons: d'abord, les dimensions du véhicule en position déployée sont telles que tout retournement est impossible entre les parois. D'autre part, même si le vérin de déploiement 42 n'est plus alimenté, les bras longitudinaux restent déployés en raison de l'existence du point d'arcboutement dont il a été question ci-dessus. Enfin, en cas d'incident de fonctionnement, il est possible de ramener les bras en position de repos grâce au système de déverrouillage et on peut extraire le véhicule par simple traction sur un câble.

On peut imaginer d'autres variantes, par exemple, si dans l'exemple décrit ci-dessus, les quatre roues sont à la fois motrices et directrices, on peut imaginer des variantes oú certaines de ces roues ne seraient pas motrices ou ne seraient pas directrices.

Enfin, les applications de ce véhicule ne se limitent pas au contrôle des cuves de réacteurs nucléaires à double paroi: en effet, un tel véhicule peut être utilisé dans toutes les applications où il est nécessaire d'introduire des appareils quelconques dans un espace compris entre deux parois sensiblement parallèles.

**Revendications**

1. Véhicule autopropulsé destiné à se déplacer entre deux parois (4, 6) sensiblement parallèles, caractérisé en ce qu'il comprend une structure centrale porteuse (19), un premier jeu de roues (20, 22) motrices et directrices et un deuxième jeu de roues (24, 26) motrices et directrices, le premier jeu de roues (20, 22) étant relié à la structure centrale porteuse (19) par des premiers moyens de liaison longitudinaux (21, 23) et le deuxième jeu de roues (24, 26) étant relié à la structure centrale porteuse (19) par des deuxièmes moyens de liaison transversaux (25, 27), et en ce qu'en position de travail le premier jeu de roues (20, 22) et les moyens de liaison longitudinaux (21, 23) sont situés dans un plan longitudinal par rapport au véhicule tandis que le deuxième jeu de roues (24, 26) et les moyens de liaison transversaux (25, 27) sont situés dans un plan transversal par rapport au véhicule, lesdits plans longitudinal et transversal étant perpendiculaires entre eux et perpendiculaires auxdites parois (4, 6) sensiblement parallèles.

2. Véhicule selon la revendication 1, caractérisé en ce que les moyens de liaison entre les deux roues (20, 22) du premier jeu et la structure centrale (19) comprennent deux bras longitudinaux (21, 23) dont une extrémité est liée ladite structure centrale (19), chaque roue (20, 22) étant montée à l'autre extrémité de chaque bras (21, 23).

3. Véhicule selon la revendication 2, caractérisé en ce qu'il comporte des moyens permettant aux deux bras longitudinaux (21, 23) de se déplacer dans le plan longitudinal tout en restant symétriques par rapport au plan transversal.

4. Véhicule selon la revendication 2, caractérisé en ce qu'il comporte des moyens élastiques (48) agissant sur les bras longitudinaux (21, 23) afin d'appliquer les roues (20, 22) sur l'une (6) des deux parois.

5. Véhicule selon la revendication 2, caractérisé en ce qu'il comprend des moyens de déploiement (32) pouvant agir sur les bras longitudinaux (21, 23) afin de les déplacer entre une position de travail et une position escamotée.

6. Véhicule selon la revendication 5, caractérisé en ce que les moyens de déploiement des bras longitudinaux (21, 23) comprennent un vérin de déploiement (42).

7. Véhicule selon les revendications 4, 5 et 6, caractérisé en ce que lesdits moyens de déploiement comprennent lesdits moyens élastiques, ces derniers étant constitués par un vérin de suspension (48) disposé de manière à transmettre aux bras longitudinaux (21, 23) les mouvements du vérin de déploiement (42).

8. Véhicule selon la revendication 1, caractérisé en ce que les moyens de liaison entre chaque roue (24) du deuxième jeu et la structure centrale porteuse (19) comprennent un bras transversal (25) dont une extrémité est liée à la structure centrale porteuse (19), la roue (24) étant montée à l'autre extrémité du bras (25).

9. Véhicule selon la revendication 8, caractérisé en ce qu'il comporte des moyens permettant de déplacer les bras transversaux (25, 27) entre une position de travail et une position repliée.

10. Véhicule selon les revendications 2 et 8, caractérisé en ce qu'il comprend des moyens de verrouillage permettant de verrouiller les bras longitudinaux et/ou transversaux en position de travail.

11. Véhicule selon les revendications 5 et 8, caractérisé en ce que lesdits moyens de déploiement des bras longitudinaux (21, 23) sont agencés de manière à agir également sur les bras transversaux (25, 27) afin que ces derniers soient amenés en position de travail en même temps que les bras longitudinaux (21, 23).

12. Véhicule selon les revendications 7 et 10, caractérisé en ce qu'il comprend des moyens d'excitation du vérin de déploiement (42) et du vérin de suspension (48), ces moyens d'excitation étant agencés de sorte que l'excitation du vérin de suspension (48) n'est possible que lorsque les bras longitudinaux et transversaux sont verrouillés en position de travail.

13. Véhicule selon la revendication 10, caractérisé en ce qu'il comporte des moyens de déverrouillage, en cas d'urgence, des bras longitudinaux et transversaux.

14. Véhicule selon la revendication 13, caractérisé en ce que lesdits moyens de déverrouillage comprennent un câble (80) pouvant libérer les moyens de verrouillage (46) s'il est soumis à une traction supérieure à un seuil prédéterminé.

15. Véhicule selon la revendication 1, caractérisé en ce qu'il comprend un moteur de traction (90) agissant sur chaque roue (24) et des moyens de débrayage de chacun des moteurs (90).

16. Véhicule autopropulsé selon la revendication 15, caractérisé en ce qu'il comporte un organe d'accouplement débrayable situé entre le moteur de traction (90) et la roue (24), cet organe d'accouplement comprenant une partie (110) qui fond sous l'action commandée de moyens générateurs de chaleur.

17. Véhicule selon la revendication 1, caractérisé en ce qu'il est équipé de moyens de contrôle de l'une (4) des deux parois nécessitant le placage d'un dispositif sur cette paroi.

18. Véhicule selon la revendication 17, caractérisé en ce qu'il comprend au moins un transducteur à ultrasons et une mini-cuve (28) équipée d'un joint à lèvres (114) définissant un espace (115) contenant un liquide de couplage acoustique.

19. Véhicule selon les revendications 2 et 18, caractérisé en ce qu'il comprend un pantographe (36) reliant la mini-cuve (28) à l'un (21) des bras longitudinaux et permettant de la plaquer contre l'une (4) des deux parois.

20. Véhicule selon la revendication 16, caractérisé en ce qu'il comprend un réservoir (116) de liquide de couplage comportant un tube lesté (124) mobile à l'intérieur de ce réservoir afin de prélever le liquide dans la partie la plus basse de celui-ci.

**Patentansprüche**

1. Selbstbetriebenes Fahrzeug, welches sich zwischen zwei im wesentlichen parallelen Wänden (4, 6) bewegen soll, dadurch gekennzeichnet, dass es eine mittlere Tragstruktur (19), einen ersten Satz Antriebs- und Lenkräder (20, 22) und einen zweiten Satz Antriebs- und Lenkräder (24, 26) umfasst, wobei der erste Satz Räder (20, 22) mit der mittleren Tragstruktur (19) durch erste Längsverbindungsmittel (21, 23) und der zweite Satz Räder (24, 26) mit der mittleren Tragstruktur (19) durch zweite Querverbindungsmittel (25, 27) verbunden ist, und dass sich in der Arbeitsstellung der erste Satz Räder (20, 22) und die Längsverbindungsmittel (21, 23) in einer Längsebene in Bezug auf das Fahrzeug befinden, während sich der zweite Satz Räder (24, 26) und die Querverbindungsmittel (25, 27) in einer Querebene in Bezug auf das Fahrzeug befinden, wobei die Längsebene und die Querebene senkrecht zueinander und senkrecht zu den im wesentlichen parallelen Wänden (4, 6) verlaufen.

2. Fahrzeug nach Anspruch 1, dadurch gekennzeichnet, dass die Verbindungsmittel zwischen den zwei Rädern (20, 22) des ersten Satzes und der mittleren Struktur (19) zwei Längsarme (21, 23) umfassen, deren eines Ende mit der mittleren Struktur (19) verbunden ist, wobei jedes Rad (20, 22) an dem anderen Ende eines jeden Armes (21, 23) angebracht ist.

3. Fahrzeug nach Anspruch 2, dadurch gekennzeichnet, dass es Mittel umfasst, die es den zwei Längsarmen (21, 23) ermöglichen, sich in der Längsebene zu bewegen, wobei sie aber symmetrisch in Bezug auf die Querebene bleiben.

4. Fahrzeug nach Anspruch 2, dadurch gekennzeichnet, dass es elastische Mittel (48) aufweist, die auf die zwei Längsarme (21, 23) wirken, um die Räder (20, 22) gegen eine (6) der zwei Wände zu drücken.

5. Fahrzeug nach Anspruch 2, dadurch gekennzeichnet, dass es Mittel (32) zum Ausfahren umfasst, die auf die Längsarme (21, 23) wirken können, um diese zwischen einer Arbeitsstellung und einer eingezogenen Stellung zu bewegen.

6. Fahrzeug nach Anspruch 5, dadurch gekennzeichnet, dass die Mittel zum Ausfahren der Längsarme (21, 23) Linearantriebe (42) zum Ausfahren umfassen.

7. Fahrzeug nach den Ansprüchen 4, 5 und 6, dadurch gekennzeichnet, dass die Mittel zum Ausfahren die elastischen Mittel umfassen, wobei letztere von einer Linearfederanordnung (48) gebildet sind, die derart angeordnet ist, dass sie die Bewegung des Linearantriebs zum Ausfahren (42) auf die Längsarme (21, 23) überträgt.

8. Fahrzeug nach Anspruch 1, dadurch gekennzeichnet, dass die Verbindungsmittel zwischen jedem Rad (24) des zweiten Satzes und der mittleren Tragstruktur (19) einen Querarm (25) umfassen, dessen eines Ende mit der mittleren Tragstruktur (19) verbunden ist, wobei das Rad (24) an dem anderen Ende des Armes (25) angebracht ist.

9. Fahrzeug nach Anspruch 8, dadurch gekennzeichnet, dass es Mittel umfasst, die ermöglichen, die Querarme (25, 27) zwischen einer Arbeitsstellung und einer zurückgezogenen Stellung zu bewegen.

10. Fahrzeug nach den Ansprüchen 2 und 8, dadurch gekennzeichnet, dass es Verriegelungsmittel umfasst, die ermöglichen, die Längsarme und/oder Querarme in der Arbeitsstellung zu verriegeln.

11. Fahrzeug nach den Ansprüchen 5 und 8, dadurch gekennzeichnet, dass die Mittel zum Ausfahren der Längsarme (21, 23) derart angeordnet sind, dass sie auch auf die Querarme (25, 27) wirken, damit diese gleichzeitig in die Arbeitsstellung gebracht werden, wie die Längsarme (21, 23).

12. Fahrzeug nach den Ansprüchen 7 und 10, dadurch gekennzeichnet, dass es Erregungsmittel für den Linearantrieb (42) zum Ausfahren und die Linearfederanordnung (48) umfasst, wobei die Erregungsmittel derart ausgebildet sind, dass die Erregung der Linearfederanordnung (48) nur möglich ist, wenn die Längs- und Querarme in der Arbeitsstellung verriegelt sind.

13. Fahrzeuge nach Anspruch 10, dadurch gekennzeichnet, dass es für den Notfall Entriegelungsmittel für die Längs- und Querarme umfasst.

14. Fahrzeug nach Anspruch 13, dadurch gekennzeichnet, dass die Entriegelungsmittel ein Seil (80) umfassen, welches die Verriegelungsmittel (46) freigeben kann, wenn es einer Zugkraft ausgesetzt wird, die höher als eine vorbestimmte Schwelle ist.

15. Fahrzeug nach Anspruch 1, dadurch gekennzeichnet, dass es einen Antriebsmotor (90), der auf jedes Rad (24) wirkt, und Entkupplungsmittel für jeden der Motore (90) aufweist.

16. Selbstbetriebenes Fahrzeug nach Anspruch 15, dadurch gekennzeichnet, dass es ein sich zwischen dem Antriebsmotor (90) und dem Rad (24) befindliches, auskuppelbares Kopplungsteil aufweist, welches einen Abschnitt (110) umfasst, der durch die gesteuerte Wirkung von Wärmeerzeugungsmitteln schmilzt.

17. Fahrzeug nach Anspruch 1, dadurch gekennzeichnet, dass es mit Überwachungsmitteln für eine (4) der zwei Wände ausgerüstet ist, die die Anordnung einer Vorrichtung auf diese Wand erfordert.

18. Fahrzeug nach Anspruch 17, dadurch gekennzeichnet, dass es wenigstens einen Ultraschallwandler und einen sehr kleinen Behälter (28) aufweist, der mit einer Lippendichtung (114) ausgerüstet ist, die einen eine akustische Kopplungsflüssigkeit enthaltenden Raum (115) begrenzen.

19. Fahrzeug nach den Ansprüchen 2 und 18, dadurch gekennzeichnet, dass es einen Pantograph (36) aufweist, der den sehr kleinen Behälter (28) mit einem (21) der Längsarme verbindet und ermöglicht, den sehr kleinen Behälter gegen eine (4) der zwei Wände zu drücken.

20. Fahrzeug nach Anspruch 16, dadurch gekennzeichnet, dass es keinen Kopplungsflüssigkeitsbehälter (116) aufweist, welcher ein freibewegliches Rohr (124) im Inneren dieses Behälters umfasst, um dessen tiefstem Teil Flüssigkeit zu entnehmen.

## Claims

1. Self-propelled vehicle intended to move between approximately two parallel walls (4, 6), characterized in that it comprises a central bearing structure (19), a first set of driving and guiding wheels (20, 22) and a second set of driving and guiding wheels (24, 26), the first set of wheels (20, 22) being connected to the central bearing structure (19) by first longitudinal means for linking (21, 23) and the second set of wheels (24, 26) being connected to the central bearing structure (19) by second transverse means for linking (25, 27), and in that in the working position the first set of wheels (20, 22) and the longitudinal means for linking (21, 23) are situated in a longitudinal plane relative to the vehicle, while the second set of wheels (24, 26) and the transverse means for linking (25, 27) are situated in a transverse plane relative to the vehicle, the said longitudinal and transverse planes being perpendicular to one another and perpendicular to the said substantially parallel walls (4, 6).

2. Vehicle according to Claim 1, characterized in that the means for linking between the two wheels (20, 22) of the first set and the central structure (19) comprise two longitudinal arms (21, 23), one end of which is connected to the said central structure (19), each wheel (20, 22) being mounted at the other end of each arm (21, 23).

3. Vehicle according to Claim 2, characterized in that it includes means permitting the two longitudinal arms (21, 23) to move in the longitudinal plane while remaining symmetrical relative to the transverse plane.

4. Vehicle according to Claim 2, characterized in that it includes elastic means (48) acting on the longitudinal arms (21, 23) in order to apply the wheels (20, 22) to one (6) of the two walls.

5. Vehicle according to Claim 2, characterized in that it includes distributing means (32) capable of acting on the longitudinal arms (21, 23) in order to displace them between a working position and a retracted position.

6. Vehicle according to Claim 5, characterized in that the means for spreading the longitudinal arms (21, 23) comprise a spreading jack (42).

7. Vehicle according to Claims 4, 5 and 6, characterized in that the said spreading means include the said elastic means, the latter comprising a suspension jack (48) disposed in such a manner as to transmit to the longitudinal arms (21, 23) the movements of the spreading jack (42).

8. Vehicle according to Claim 1, characterized in that the means for linking between each wheel (24) of the second set and the central bearing structure (19) comprise a transverse arm (25), one end of which is connected to the central bearing structure (19), the wheel (24) being mounted at the other end of the arm (25).

9. Vehicle according to Claim 8, characterized in that it includes means permitting displacement of the transverse arms (25, 27) between a working position and a folded-back position.

10. Vehicle according to Claims 2 and 8, characterized in that it includes locking means permitting locking of the longitudinal and/or transverse arms in the working position.

11. Vehicle according to Claims 5 and 8, characterized in that the said means for spreading the longitudinal arms (21, 23) are fitted in such a manner as to act equally on the transverse arms (25, 27) in order that the latter should be guided into the working position at the same time as the longitudinal arms (21, 23).

12. Vehicle according to Claims 7 and 10, characterized in that it includes means for actuating the spreading jack (42) and the suspension jack (48), these actuating means being fitted in such a manner that the actuation of the suspension jack (48) is only possible when the longitudinal and transverse arms are locked in the working position.

13. Vehicle according to Claim 10, characterized in that it includes means for unlocking the longitudinal and transverse arms in an emergency.

14. Vehicle according to Claim 13, characterized in that the said unlocking means comprise a cable (80) which can release the unlocking means (46) if it is subjected to a traction exceeding a predetermined threshold.

15. Vehicle according to Claim 1, characterized in that it includes a traction motor (90) acting on each wheel (24) and means for disengaging each of the motors (90).

16. Self-propelled vehicle according to Claim 15, characterized in that it includes a disengageable coupling element situated between the traction motor (90) and the wheel (24), this coupling element including a part (110) which melts under the controlled action of heat generating means.

17. Vehicle according to Claim 1, characterized in that it is equipped with means for monitoring one (4) of the two walls requiring the plating of a device on this wall.

18. Vehicle according to Claim 17, characterized in that it includes at least one ultrasonic transducer and a mini-cell (28) equipped with a lipseal (114) defining a space (115) containing an acoustic coupling liquid.

19. Vehicle according to Claim 2 and 18, characterized in that it includes a pantograph (36) connecting the mini-cell (28) to one (21) of the longitudinal arms and permitting plating thereof against one (4) of the two walls.

20. Vehicle according to Claim 16, characterized in that it includes a reservoir (116) for coupling liquid, comprising a weighted tube (124) movable within this reservoir in order to sample the liquid in the lowest part of the latter.

FIG. 1

# FIG. 2a

FIG. 2

FIG. 3

0 099 819

15

0 099 819

FIG. 4a

FIG. 4b

17

FIG. 5

FIG. 6

FIG. 7

FIG. 8

0 099 819

**FIG. 9**

6

20-22

116

115   118

27

120

25

26   4   28   5   114   24

**FIG. 10**

116

119

28   118

114   117

120   122   124

4   5   115   126

25